# EUROPEAN PATENT APPLICATION

(11) **EP 4 524 931 A1**
(43) Date of publication of application: **19.03.2025**
(21) Application number: 24194150.9
(22) Date of filing: 12.08.2024
(51) Int. Cl.: G08G 5/00, G01C 23/00

(54) **SYSTEM AND METHOD TO DISPLAY VIEW OF AIRPORT MOVING MAP DEPICTING RUNWAY OVERRUN AWARENESS AND ALERTING SYSTEM (ROAAS)-BASED INDICATORS**

(30) Priority: 11.08.2023 US 202318233087
(71) Applicant: Rockwell Collins, Inc., Cedar Rapids, IA 52498 (US)
(72) Inventor: BODE, Carl H., Plankinton (US)
(74) Representative: Dehns

(57) **Abstract**

A system may be configured to display a view of an airport moving map (AMM) depicting a location of an aircraft relative to a runway, the runway, a maximum runway overrun awareness and alerting system (ROAAS) model distance (RMD) indicator on the runway, a nominal model distance (NMD) indicator on the runway, and a ROAAS runway end indicator.

## Description

### BACKGROUND

Currently, flight displays lack of means of visualizing runway overrun awareness and alerting system (ROAAS) determined stopping distances on an intended runway during an approach procedure. It is difficult for flight crew to visualize where stopping distances are at and where ROAAS alerts are anticipated to occur along the intended landing runway.

### SUMMARY

In one aspect, embodiments of the inventive concepts disclosed herein are directed to a system. The system may include a display and at least one processor, wherein one or more of the at least one processor are communicatively coupled to the display. The at least one processor may be configured to: obtain runway overrun awareness and alerting system (ROAAS) data associated with an approach procedure being performed by an aircraft toward a runway, the ROAAS data including information of a maximum ROAAS model distance (RMD), a nominal model distance (NMD), and a ROAAS runway end; wherein the maximum RMD is a maximum predicted distance required for the aircraft come to a stop on the runway based at least on at least one current aircraft state; wherein the NMD is a predicted stopping distance from a runway threshold of the runway based at least on at least one of an aircraft performance of the aircraft, current environmental conditions associated with the aircraft, an in-air auto brake selection of the aircraft, or an on-ground deceleration rate associated with the aircraft; wherein the ROAAS runway end is an implied runway end based at least on a landing distance available according to at least one of a Notice to Air Mission (NOTAM) or an airport database; generate a view of an airport moving map (AMM) having a map range, the view being an overhead view, the AMM depicting a location of the aircraft relative to the runway, the runway, a maximum RMD indicator on the runway, an NMD indicator on the runway, and a ROAAS runway end indicator; wherein the maximum RMD indicator is an indicator associated with the maximum RMD; wherein the NMD indicator is an indicator associated with the NMD; wherein the ROAAS runway end indicator is an indicator associated with the ROAAS runway end; and output the view of the AMM as graphical data. The display may be configured to display the view of the AMM to a user.

In a further aspect, embodiments of the inventive concepts disclosed herein are directed to a method. The method may include: obtaining, by at least one processor, runway overrun awareness and alerting system (ROAAS) data associated with an approach procedure being performed by an aircraft toward a runway, the ROAAS data including information of a maximum ROAAS model distance (RMD), a nominal model distance (NMD), and a ROAAS runway end; wherein the maximum RMD is a maximum predicted distance required for the aircraft come to a stop on the runway based at least on at least one current aircraft state; wherein the NMD is a predicted stopping distance from a runway threshold of the runway based at least on at least one of an aircraft performance of the aircraft, current environmental conditions associated with the aircraft, an in-air auto brake selection of the aircraft, or an on-ground deceleration rate associated with the aircraft; wherein the ROAAS runway end is an implied runway end based at least on a landing distance available according to at least one of a Notice to Air Mission (NOTAM) or an airport database; wherein one or more of the at least one processor is communicatively coupled to a display; generating, by the at least one processor, a view of an airport moving map (AMM) having a map range, the view being an overhead view, the AMM depicting a location of the aircraft relative to the runway, the runway, a maximum RMD indicator on the runway, an NMD indicator on the runway, and a ROAAS runway end indicator; wherein the maximum RMD indicator is an indicator associated with the maximum RMD; wherein the NMD indicator is an indicator associated with the NMD; wherein the ROAAS runway end indicator is an indicator associated with the ROAAS runway end; outputting, by the at least one processor, the view of the AMM as graphical data; and displaying, by the display, the view of the AMM to a user.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a view of an exemplary embodiment of a view of an airport moving map (AMM) according to the inventive concepts disclosed herein.
FIG. 2 is an exemplary diagram illustrating ROAAS information according to the inventive concepts disclosed herein.
FIG. 3 is a view of an exemplary embodiment of a system including an aircraft according to the inventive concepts disclosed herein.
FIG. 4 is a view of an exemplary embodiment of a display unit computing device of FIG. 3 according to the inventive concepts disclosed herein.
FIG. 5 is a view of an exemplary embodiment of a computing device of FIG. 3 according to the inventive concepts disclosed herein.
FIG. 6 is a view of a portion of an exemplary embodiment of the system of FIG. 3 according to the inventive concepts disclosed herein.
FIG. 7 is a view of a portion of an exemplary embodiment of the system of FIG. 3 according to the inventive concepts disclosed herein.
FIG. 8 is a diagram of an exemplary embodiment of a method according to the inventive concepts disclosed herein.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein may be directed to a system and a method configured to display a view of an airport moving map (AMM) depicting a location of an aircraft relative to a runway, the runway, a maximum ROAAS model distance (RMD) indicator on the runway, a nominal model distance (NMD) indicator on the runway, and/or a ROAAS runway end indicator.

In some embodiments, a ROAAS runway end is a point on the runway, which such point is where ROAAS alerts are based, based at least on a displaced threshold value and/or a landing distance available value.

Some embodiments may display a maximum ROAAS model distance (RMD), a nominal model distance (NMD) (e.g., a ROAAS NMD), and a ROAAS runway end along an intended landing runway on an airport moving map (AMM), which may have an overhead view. While the pilot in command might typically be heads up and/or focused on a primary flight display (PFD) at a point in the flight during an approach procedure, such information would provide valuable situational awareness for a pilot not in command to anticipate where the aircraft will stop along the landing runway and nearest available taxi to exit the runway. The maximum RMD may be a maximum predicted distance required for an aircraft come to a stop on the runway based at least on at least one current aircraft state. The NMD may be a predicted stopping distance from a runway threshold of the runway based at least on at least one of an aircraft performance of the aircraft, current environmental conditions associated with the aircraft, an in-air auto brake selection of the aircraft, or an on-ground deceleration rate associated with the aircraft. The ROAAS runway end may be an implied runway end based at least on a landing distance available according to a Notice to Air Mission (NOTAM), an airport database, and/or a displaced threshold according to the NOTAM.

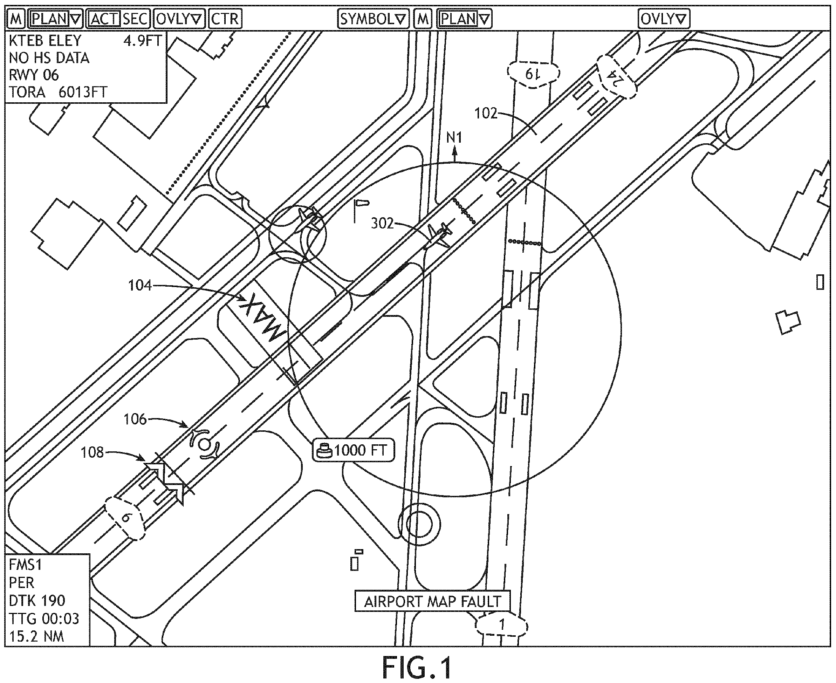

Referring now to FIG. 1, an exemplary embodiment of an exemplary view of an AMM 100 is shown. For example, the AMM 100 may have an overhead view (e.g., directly overhead view) of a portion of an airport. For example, the AMM 100 may include a depiction of an aircraft 302 (e.g., a location (e.g., a current location) of the aircraft (e.g., an aircraft performing an approach procedure) relative to a runway 102), a runway 102 (e.g., an intended runway for landing), a maximum RMD indicator 104, an NMD indicator 106, and/or a ROAAS runway end indicator 108. The maximum RMD indicator 104 may be an indicator associated with the maximum RMD. The NMD indicator 106 may be an indicator associated with the NMD. The ROAAS runway end indicator 108 may be an indicator associated with the ROAAS runway end. The AMM 100 may allow for a variety of map ranges (e.g., the higher the map range, the more zoomed out the map is) to be used for operations during an approach procedure; for example, in some embodiments, the map range be between 1,000 feet and 6,000 feet (e.g., between 2,000 feet and 4,000 feet, such as 3,000 feet). Currently, flight crews often use AMM map ranges of 2 nautical miles (NM) or greater for in-air flight phases.

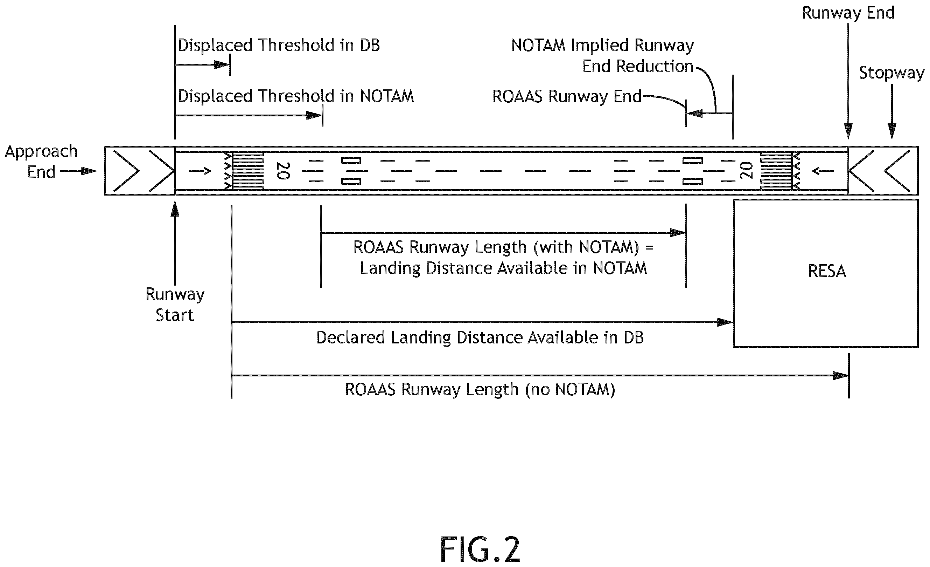

Referring now to FIG. 2, an exemplary diagram illustrating ROAAS information is shown. For example, the ROAAS may have access to and/or determine any of the following information: an approach end; a runway start; a runway end (e.g., a physical end of the runway); a stopway; a ROAAS runway length lacking NOTAM information; a displaced threshold in an airport database; a displaced threshold according to a NOTAM; a declared landing distance available in the airport database; a NOTAM implied runway end reduction; and/or a ROAAS runway end.

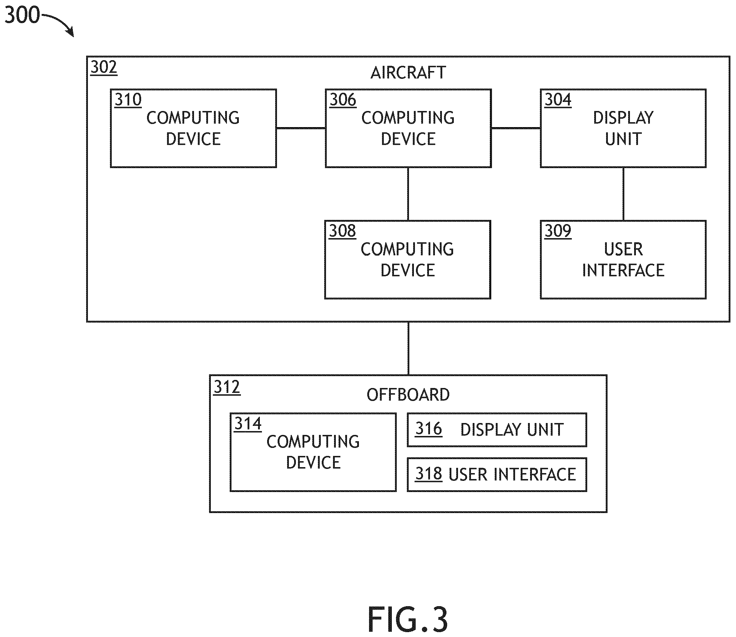

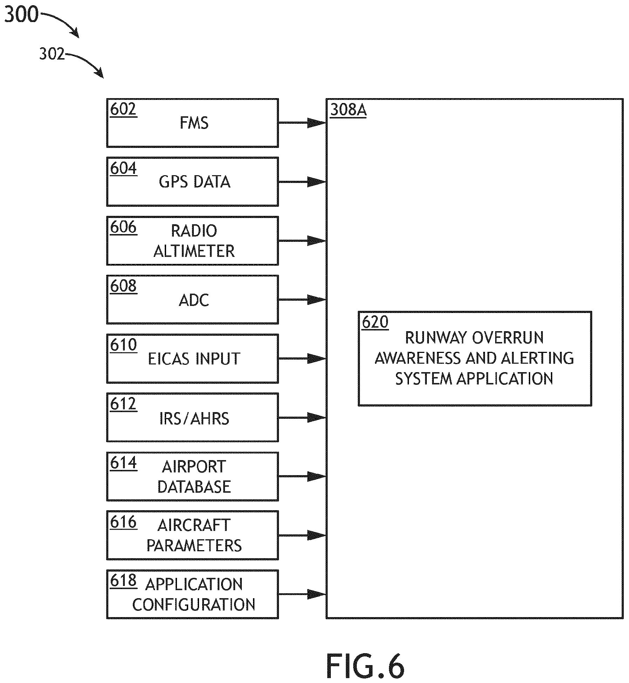

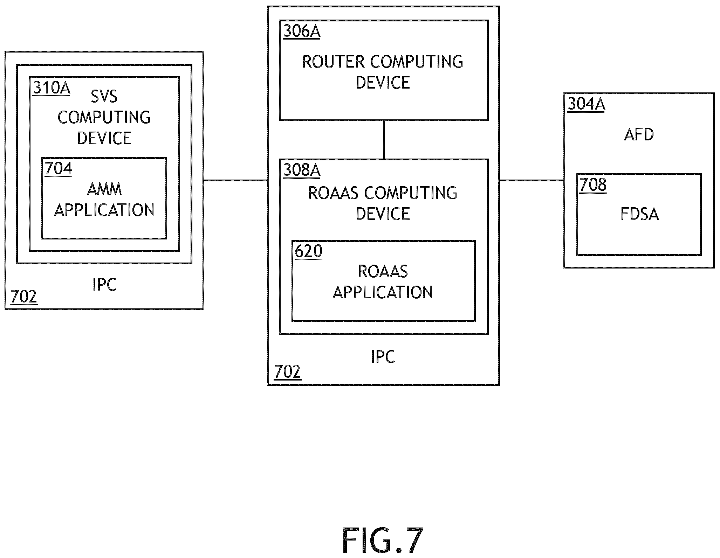

Referring now to FIGS. 3, 4, 5, 6, and 7, an exemplary embodiment of a system 300 according to the inventive concepts disclosed herein is depicted. In some embodiments, the system may include an aircraft 302 and/or at least one offboard platform 312, some or all of which may be communicatively coupled at any given time.

In some embodiments, the aircraft 302 may include at least one onboard pilot and may be a single-piloted or multiple-piloted aircraft; in some embodiments, the aircraft 302 may be an uncrewed aerial system (UAS) (e.g., a remote-piloted UAS and/or an autonomous UAS). In some embodiments, the aircraft 302 may include at least one user (e.g., flight crew and/or pilot(s)), at least one display unit computing device 304, at least one computing device 306, at least one computing device 308, at least one user interface 309, at least one computing device 310, at least one flight management system (FMS) 602, at least one global position system (GPS) 604, at least one radio altimeter 606, at least one air data computer (ADC) 608, at least one engine indication and crew alerting system (EICAS) 610, at least one inertial reference system (IRS) and/or AHRS 612, at least one airport database 614 maintained in memory, at least one aircraft parameters 616 maintained in memory, and/or at least one application configuration 618 maintained in memory, some or all of which may be communicatively coupled at any given time.

In some embodiments, the at least one display unit computing device 304, the at least one computing device 306, the at least one computing device 308, the at least one user interface system 309, the at least one computing device 310, the at least one computing device 314, the at least one display unit computing device 316, and/or the at least one user interface 318 may be implemented as a single computing device or any number of computing devices configured to perform (e.g., collectively perform if more than one computing device) any or all of the operations disclosed throughout. For example, in some embodiments, the at least one display unit computing device 304, the at least one computing device 306, the at least one computing device 308, the at least one user interface 309, the at least one computing device 310, the at least one display unit computing device 316, and/or the at least one user interface 318 may be installed in the aircraft 302, the offboard platform 314, or some combination thereof. For example, some or all of the computing devices (e.g., 304, 306, 308, 309, 310, 314, 316, and/or 318) may be contained in one or more integrated processing cabinets (IPCs) 702.

In some embodiments, the user may be a pilot or crew member, who may be located onboard the aircraft 302 or at the offboard platform 312. For example, the user may interface with the system 300 via the at least one user interface 309 and/or 318. For example, the at least one user interface 309 may be implemented as any suitable user interface, such as a touchscreen (e.g., of the display unit computing device 304 and/or another display unit), a multipurpose control panel, a control panel integrated into a flight deck, a cursor control panel (CCP) (sometimes referred to as a display control panel (DCP)), a keyboard, a mouse, a trackpad, at least one hardware button, a switch, an eye tracking system, and/or a voice recognition system. The user interface 309 may be configured to receive at least one user input and to output the at least one user input to a computing device (e.g., 304, 306, 308, 310, 314, and/or 316). For example, a pilot of the aircraft 302 may be able to interface with the user interface 309 to: engage (or disengage) a mode to cause the view to be displayed. For example, such user inputs may be output to a computing device (e.g., 304, 306, 308, 310, 314, and/or 316).

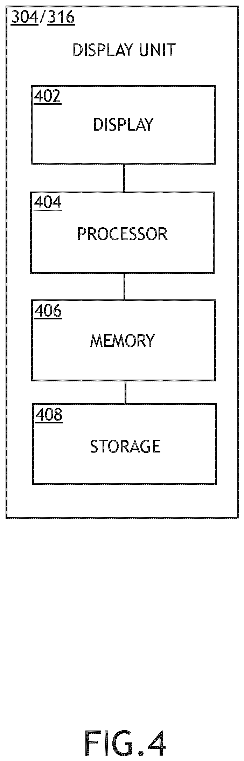

The display unit computing device 304 may be implemented as any suitable computing device, such as a primary flight display (PFD) computing device, a multi-function window (MFW) display computing device, and/or an adaptive flight display (AFD) 304A. As shown in FIG. 4, the display unit computing device 304 may include at least one display 402, at least one processor 404, at least one memory 406, and/or at least one storage 410, some or all of which may be communicatively coupled at any given time. For example, the at least one processor 404 may include at least one central processing unit (CPU), at least one graphics processing unit (GPU), at least one field-programmable gate array (FPGA), at least one application specific integrated circuit (ASIC), at least one digital signal processor, at least one virtual machine (VM) running on at least one processor, and/or the like configured to perform (e.g., collectively perform) any of the operations disclosed throughout. For example, the at least one processor 404 may include a CPU and a GPU configured to perform (e.g., collectively perform) any of the operations disclosed throughout. The processor 404 may be configured to run various software applications (e.g., a flight display system application (FDSA 708A)) or computer code stored (e.g., maintained) in a non-transitory computer-readable medium (e.g., memory 406 and/or storage 410) and configured to execute various instructions or operations. The processor 404 may be configured to perform any or all of the operations disclosed throughout. For example, the at least one processor 404 may be configured to: obtain runway overrun awareness and alerting system (ROAAS) data associated with an approach procedure being performed by an aircraft 302 toward a runway 102, the ROAAS data including information of a maximum ROAAS model distance (RMD), a nominal model distance (NMD), and a ROAAS runway end; wherein the maximum RMD is a maximum predicted distance required for the aircraft come to a stop on the runway based at least on at least one current aircraft state; wherein the NMD is a predicted stopping distance from a runway threshold of the runway based at least on at least one of an aircraft performance of the aircraft, current environmental conditions associated with the aircraft, an in-air auto brake selection of the aircraft, or an on-ground deceleration rate associated with the aircraft; wherein the ROAAS runway end is an implied runway end based at least on a landing distance available according to at least one of a Notice to Air Mission (NOTAM) or an airport database; generate a view of an airport moving map (AMM) 100 having a map range, the view being an overhead view, the AMM map depicting a location of the aircraft 302 relative to the runway 102, the runway 102, a maximum RMD indicator 104 on the runway 102, an NMD indicator 106 on the runway 102, and a ROAAS runway end indicator 108; wherein the maximum RMD indicator 104 is an indicator associated with the maximum RMD; wherein the NMD indicator 106 is an indicator associated with the NMD; wherein the ROAAS runway end indicator 108 is an indicator associated with the ROAAS runway end; and/or output the view of the AMM 100 as graphical data to the at least one display 402 for presentation to the user. The at least one display 402 may be configured to: display the view of the AMM 100 to the user.

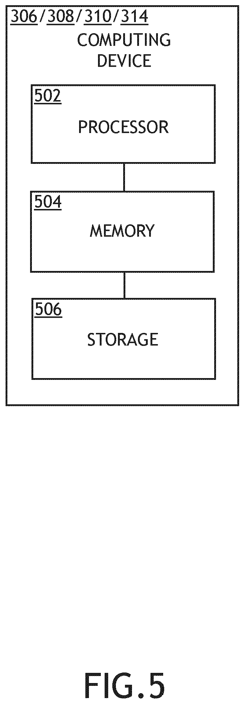

The at least one computing device 306 may be implemented as any suitable computing device, such as a router computing device 306A (e.g., an avionics full-duplex switched ethernet (AFDX) computing device). The at least one computing device 306 may include any or all of the elements shown in FIG. 5. For example, the computing device 306 may include at least one processor 502, at least one memory 504, and/or at least one storage 506, some or all of which may be communicatively coupled at any given time. For example, the at least one processor 502 may include at least one central processing unit (CPU), at least one graphics processing unit (GPU), at least one field-programmable gate array (FPGA), at least one application specific integrated circuit (ASIC), at least one digital signal processor, at least one virtual machine (VM) running on at least one processor, and/or the like configured to perform (e.g., collectively perform) any of the operations disclosed throughout. For example, the at least one processor 502 may include a CPU and a GPU configured to perform (e.g., collectively perform) any of the operations disclosed throughout. The processor 502 may be configured to run various software applications or computer code stored (e.g., maintained) in a non-transitory computer-readable medium (e.g., memory 504 and/or storage 506) and configured to execute various instructions or operations. The processor 502 of the computing device 306 may be configured to perform any or all of the operations disclosed throughout. In some embodiments, the at least one processor 502 may be configured to route data (e.g., graphical data and/or ROAAS data) to and/or from other computing devices (e.g., e.g., 304, 308, 310, 314, and/or 316) of the system 300. For example, the at least one processor 502 may be configured to: obtain runway overrun awareness and alerting system (ROAAS) data associated with an approach procedure being performed by an aircraft 302 toward a runway 102, the ROAAS data including information of a maximum ROAAS model distance (RMD), a nominal model distance (NMD), and a ROAAS runway end; generate a view of an airport moving map (AMM) 100 having a map range, the view being an overhead view, the AMM map depicting a location of the aircraft 302 relative to the runway 102, the runway 102, a maximum RMD indicator 104 on the runway 102, an NMD indicator 106 on the runway 102, and a ROAAS runway end indicator 108; and/or output the view of the AMM 100 as graphical data to the at least one display 402 for presentation to the user.

The at least one computing device 308 may be implemented as any suitable computing device, such as a ROAAS computing device 308A. The at least one computing device 308 may include any or all of the elements shown in FIG. 5. For example, the computing device 308 may include at least one processor 502, at least one memory 504, and/or at least one storage 506, some or all of which may be communicatively coupled at any given time. For example, the at least one processor 502 may include at least one central processing unit (CPU), at least one graphics processing unit (GPU), at least one field-programmable gate array (FPGA), at least one application specific integrated circuit (ASIC), at least one digital signal processor, at least one virtual machine (VM) running on at least one processor, and/or the like configured to perform (e.g., collectively perform) any of the operations disclosed throughout. For example, the at least one processor 502 may include a CPU and a GPU configured to perform (e.g., collectively perform) any of the operations disclosed throughout. The processor 502 may be configured to run various software applications (e.g., a ROAAS application 620) or computer code stored (e.g., maintained) in a non-transitory computer-readable medium (e.g., memory 504 and/or storage 506) and configured to execute various instructions or operations. The at least one processor 502 of the computing device 308 may be configured to perform any or all of the operations disclosed throughout. For example, the at least one processor 502 may be configured to: determine, generate, and/or obtain runway overrun awareness and alerting system (ROAAS) data associated with an approach procedure being performed by an aircraft 302 toward a runway 102, the ROAAS data including information of a maximum ROAAS model distance (RMD), a nominal model distance (NMD), and a ROAAS runway end; generate a view of an airport moving map (AMM) 100 having a map range, the view being an overhead view, the AMM map depicting a location of the aircraft 302 relative to the runway 102, the runway 102, a maximum RMD indicator 104 on the runway 102, an NMD indicator 106 on the runway 102, and a ROAAS runway end indicator 108; and/or output the view of the AMM 100 as graphical data to the at least one display 402 for presentation to the user.

The at least one computing device 310 may be implemented as any suitable computing device, such as a synthetic vision system (SVS) computing device 31A (e.g., a synthetic vision module with head-up display (SVM-H)). The at least one computing device 310 may include any or all of the elements shown in FIG. 5. For example, the computing device 310 may include at least one processor 502, at least one memory 504, and/or at least one storage 506, some or all of which may be communicatively coupled at any given time. For example, the at least one processor 502 may include at least one central processing unit (CPU), at least one graphics processing unit (GPU), at least one field-programmable gate array (FPGA), at least one application specific integrated circuit (ASIC), at least one digital signal processor, at least one virtual machine (VM) running on at least one processor, and/or the like configured to perform (e.g., collectively perform) any of the operations disclosed throughout. For example, the at least one processor 502 may include a CPU and a GPU configured to perform (e.g., collectively perform) any of the operations disclosed throughout. The processor 502 may be configured to run various software applications (e.g., a AMM application 704) or computer code stored (e.g., maintained) in a non-transitory computer-readable medium (e.g., memory 504 and/or storage 506) and configured to execute various instructions or operations. The at least one processor 502 of the computing device 310 may be configured to perform any or all of the operations disclosed throughout. For example, the at least one processor 502 may be configured to: determine, generate, and/or obtain runway overrun awareness and alerting system (ROAAS) data associated with an approach procedure being performed by an aircraft 302 toward a runway 102, the ROAAS data including information of a maximum ROAAS model distance (RMD), a nominal model distance (NMD), and a ROAAS runway end; generate a view of an airport moving map (AMM) 100 having a map range, the view being an overhead view, the AMM map depicting a location of the aircraft 302 relative to the runway 102, the runway 102, a maximum RMD indicator 104 on the runway 102, an NMD indicator 106 on the runway 102, and a ROAAS runway end indicator 108; and/or output the view of the AMM 100 as graphical data to the at least one display 402 for presentation to the user.

In some embodiments, the at least one offboard platform 312 may be any suitable offboard site (e.g., a ground site, such as an air traffic control tower) and/or offboard mobile platform (e.g., another vehicle). In some embodiments, the offboard platform 312 may include at least one user (e.g., flight crew and/or pilot(s)), at least one computing device 314, at least one display unit computing device 316, and/or at least one user interface 318, some or all of which may be communicatively coupled at any given time. In some embodiments, the at least one computing device 314 may be configured similarly and function similarly to some combination of the computing devices (e.g., 304, 306, 308, and/or 310) of the aircraft 302, except that the at least one computing device 314 is located offboard of the aircraft 302. In some embodiments, the at least one display unit computing device 316 may be configured similarly and function similarly to the at least one display unit computing device 304 of the aircraft 302, except that the at least one display unit computing device 316 is located offboard of the aircraft 302. In some embodiments, the at least one user interface 318 may be configured similarly and function similarly to the at least one user interface 309 of the aircraft 302, except that the at least one user interface 318 is located offboard of the aircraft 302.

For example, at least one processor (e.g., the at least one processor 404 (e.g., of the at least one display unit computing device 304 and/or 316) and/or the at least one processor 502 (e.g., of the at least one computing device 306, 308, 310, and/or 314)) may be configured to (e.g., collectively configured to, if more than one processor): determine, generate, and/or throughout. For example, the at least one processor 404 may be configured to: obtain runway overrun awareness and alerting system (ROAAS) data associated with an approach procedure being performed by an aircraft 302 toward a runway 102, the ROAAS data including information of a maximum ROAAS model distance (RMD), a nominal model distance (NMD), and a ROAAS runway end; wherein the maximum RMD is a maximum predicted distance required for the aircraft come to a stop on the runway based at least on at least one current aircraft state (e.g., at least one of a ground speed or a glidepath deviation); wherein the NMD is a predicted stopping distance from a runway threshold of the runway based at least on at least one of an aircraft performance of the aircraft, current environmental conditions associated with the aircraft, an in-air auto brake selection of the aircraft, or an on-ground deceleration rate associated with the aircraft (e.g., based at least on the aircraft performance of the aircraft, the current environmental conditions associated with the aircraft, the in-air auto brake selection of the aircraft, and the on-ground deceleration rate associated with the aircraft); wherein the ROAAS runway end is an implied runway end based at least on a landing distance available according to at least one of a Notice to Air Mission (NOTAM) or an airport database; generate a view of an airport moving map (AMM) 100 having a map range, the view being an overhead view, the AMM map depicting a location of the aircraft 302 relative to the runway 102, the runway 102, a maximum RMD indicator 104 on the runway 102, an NMD indicator 106 on the runway 102, and a ROAAS runway end indicator 108; wherein the maximum RMD indicator 104 is an indicator associated with the maximum RMD; wherein the NMD indicator 106 is an indicator associated with the NMD; wherein the ROAAS runway end indicator 108 is an indicator associated with the ROAAS runway end; and/or output the view of the AMM 100 as graphical data to the at least one display 402 for presentation to the user.

In some embodiments, at least one processor (e.g., the at least one processor 404 (e.g., of the at least one display unit computing device 304 and/or 316) and/or the at least one processor 502 (e.g., of the at least one computing device 306, 308, 310, and/or 314)) may be further configured to (e.g., collectively configured to, if more than one processor): determine that the aircraft 302 has reached a predetermined height (e.g., between 300 feet and 1,500 feet (e.g., between 600 feet and 1,000 feet, such as 750 feet)) above a ROAAS threshold for the runway 102 during the approach procedure; and/or in response to the determination that the aircraft 302 has reached the predetermined height above the runway 102, output the view of the AMM 100 as the graphical data.

The at least one processor (e.g., the at least one processor 404 (e.g., of the at least one display unit computing device 304 and/or 316) and/or the at least one processor 502 (e.g., of the at least one computing device 306, 308, 310, and/or 314)) may be configured to (e.g., collectively configured to, if more than one processor) perform any or all of the operations disclosed throughout.

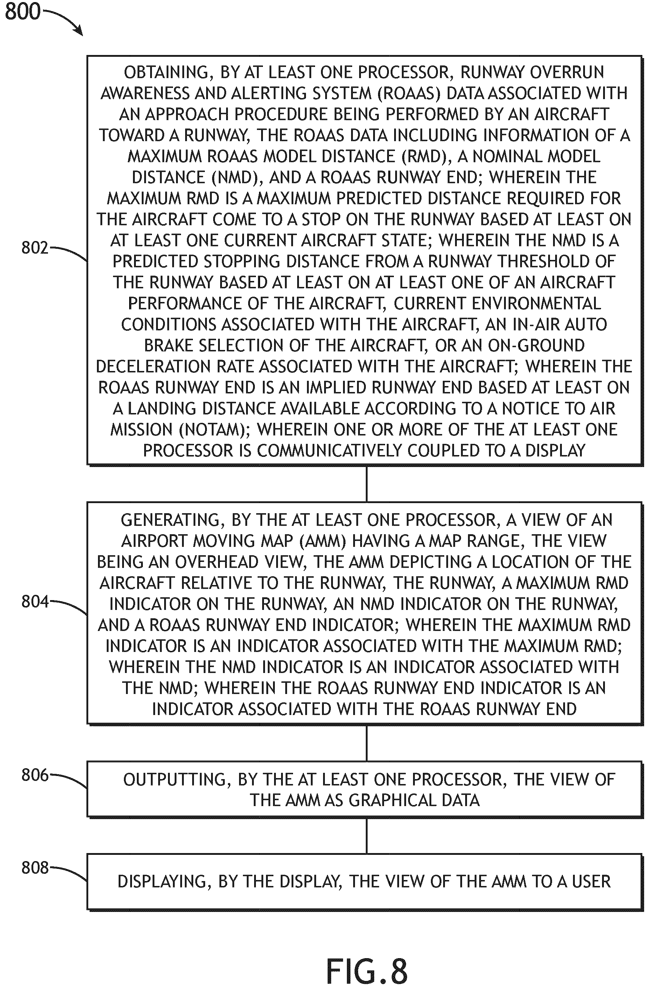

Referring now to FIG. 8, an exemplary embodiment of a method 800 according to the inventive concepts disclosed herein may include one or more of the following steps. Additionally, for example, some embodiments may include performing one or more instances of the method 800 iteratively, concurrently, and/or sequentially. Additionally, for example, at least some of the steps of the method 800 may be performed in parallel and/or concurrently. Additionally, in some embodiments, at least some of the steps of the method 800 may be performed non-sequentially.

A step 802 may include obtaining, by at least one processor, runway overrun awareness and alerting system (ROAAS) data associated with an approach procedure being performed by an aircraft toward a runway, the ROAAS data including information of a maximum ROAAS model distance (RMD), a nominal model distance (NMD), and a ROAAS runway end; wherein the maximum RMD is a maximum predicted distance required for the aircraft come to a stop on the runway based at least on at least one current aircraft state; wherein the NMD is a predicted stopping distance from a runway threshold of the runway based at least on at least one of an aircraft performance of the aircraft, current environmental conditions associated with the aircraft, an in-air auto brake selection of the aircraft, or an on-ground deceleration rate associated with the aircraft; wherein the ROAAS runway end is an implied runway end based at least on a landing distance available according to at least one of a Notice to Air Mission (NOTAM) or an airport database; wherein one or more of the at least one processor is communicatively coupled to a display.

A step 804 may include generating, by the at least one processor, a view of an airport moving map (AMM) having a map range, the view being an overhead view, the AMM map depicting a location of the aircraft relative to the runway, the runway, a maximum RMD indicator on the runway, an NMD indicator on the runway, and a ROAAS runway end indicator; wherein the maximum RMD indicator is an indicator associated with the maximum RMD; wherein the NMD indicator is an indicator associated with the NMD; wherein the ROAAS runway end indicator is an indicator associated with the ROAAS runway end.

A step 806 may include outputting, by the at least one processor, the view of the AMM as graphical data.

A step 808 may include displaying, by the display, the view of the AMM to a user.

Further, the method 800 may include any of the operations disclosed throughout.

As will be appreciated from the above, embodiments of the inventive concepts disclosed herein may be directed to a system and a method configured to display a view of an airport moving map (AMM) depicting a location of an aircraft relative to a runway, the runway, a maximum ROAAS model distance (RMD) indicator on the runway, a nominal model distance (NMD) indicator on the runway, and/or a ROAAS runway end indicator.

As used throughout and as would be appreciated by those skilled in the art, "at least one non-transitory computer-readable medium" may refer to as at least one non-transitory computer-readable medium (e.g., at least one computer-readable medium implemented as hardware; e.g., at least one non-transitory processor-readable medium, at least one memory (e.g., at least one nonvolatile memory, at least one volatile memory, or a combination thereof; e.g., at least one random-access memory, at least one flash memory, at least one read-only memory (ROM) (e.g., at least one electrically erasable programmable read-only memory (EEPROM)), at least one on-processor memory (e.g., at least one on-processor cache, at least one on-processor buffer, at least one on-processor flash memory, at least one on-processor EEPROM, or a combination thereof), or a combination thereof), at least one storage device (e.g., at least one hard-disk drive, at least one tape drive, at least one solid-state drive, at least one flash drive, at least one readable and/or writable disk of at least one optical drive configured to read from and/or write to the at least one readable and/or writable disk, or a combination thereof), or a combination thereof).

As used throughout, "at least one" means one or a plurality of; for example, "at least one" may comprise one, two, three, ..., one hundred, or more. Similarly, as used throughout, "one or more" means one or a plurality of; for example, "one or more" may comprise one, two, three, ..., one hundred, or more. Further, as used throughout, "zero or more" means zero, one, or a plurality of; for example, "zero or more" may comprise zero, one, two, three, ..., one hundred, or more.

In the present disclosure, the methods, operations, and/or functionality disclosed may be implemented as sets of instructions or software readable by a device. Further, it is understood that the specific order or hierarchy of steps in the methods, operations, and/or functionality disclosed are examples of exemplary approaches. Based upon design preferences, it is understood that the specific order or hierarchy of steps in the methods, operations, and/or functionality can be rearranged while remaining within the scope of the invention as defined by the claims. The accompanying claims may present elements of the various steps in a sample order, and are not necessarily meant to be limited to the specific order or hierarchy presented.

It is to be understood that embodiments of the methods according to the inventive concepts disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

From the above description, it is clear that the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the scope of the claims.

## Claims

1. A system, comprising:
a display (402); and
at least one processor (502), one or more of the at least one processor communicatively coupled to the display, the at least one processor configured to:
obtain runway overrun awareness and alerting system, ROAAS, data associated with an approach procedure being performed by an aircraft toward a runway, the ROAAS data including information of a maximum ROAAS model distance, RMD, a nominal model distance, NMD, and a ROAAS runway end; wherein the maximum RMD is a maximum predicted distance required for the aircraft come to a stop on the runway based at least on at least one current aircraft state; wherein the NMD is a predicted stopping distance from a runway threshold of the runway based at least on at least one of an aircraft performance of the aircraft, current environmental conditions associated with the aircraft, an in-air auto brake selection of the aircraft, or an on-ground deceleration rate associated with the aircraft; wherein the ROAAS runway end is an implied runway end based at least on a landing distance available according to at least one of a Notice to Air Mission, NOTAM, or an airport database;
generate a view of an airport moving map, AMM, having a map range, the view being an overhead view, the AMM depicting a location of the aircraft relative to the runway, the runway, a maximum RMD indicator on the runway, an NMD indicator on the runway, and a ROAAS runway end indicator; wherein the maximum RMD indicator is an indicator associated with the maximum RMD; wherein the NMD indicator is an indicator associated with the NMD; wherein the ROAAS runway end indicator is an indicator associated with the ROAAS runway end; and
output the view of the AMM as graphical data;
wherein the display is configured to display the view of the AMM to a user.

2. The system of claim 1, the at least one processor is further configured to determine that the aircraft has reached a predetermined height above a ROAAS threshold for the runway during the approach procedure; and in response to the determination that the aircraft has reached the predetermined height above the runway, output the view of the AMM as the graphical data.

3. The system of claim 2, wherein the predetermined height is between 300 feet (91.4m) and 1,500 feet (457.2m).

4. The system of claim 3, wherein the predetermined height is between 600 feet (182.9m) and 1,000 feet (304.8m).

5. The system of any preceding claim, wherein the map range of the AMM is between 1,000 feet (304.8m) and 6,000 feet (1828.8m).

6. The system of claim 5, wherein the map range of the AMM is between 2,000 feet (609.6m) and 4,000 feet (1219.2m).

7. The system of any preceding claim, wherein the at least one current aircraft state comprises at least one of a ground speed or a glidepath deviation.

8. The system of any preceding claim, wherein the NMD is the predicted stopping distance from the runway threshold of the runway based at least on the aircraft performance of the aircraft, the current environmental conditions associated with the aircraft, the in-air auto brake selection of the aircraft, and the on-ground deceleration rate associated with the aircraft.

9. The system of any preceding claim, wherein the user is located offboard of the aircraft.

10. The system of any of claims 1 to 8, wherein the user is located onboard the aircraft.

11. The system of any preceding claim, further comprising: a display unit computing device (316) comprising the display and at least one first processor of the at least one processor; a ROAAS computing device (308A) comprising at least one second processor of the at least one processor, wherein the at least one second processor is configured to execute a ROAAS application; and a synthetic vision system, SVS, computing device (314) comprising at least one third processor of the at least one processor, wherein the at least one third processor is configured to execute an AMM application.

12. The system of claim 11, further comprising a router computing device (306A), wherein the display unit computing device, the ROAAS computing device, and the SVS computing device are communicatively coupled via the router computing device, wherein the display unit computing device, the ROAAS computing device, the SVS computing device, and the router computing device are onboard the aircraft.

13. The system of claim 11, wherein the display unit computing device is an adaptive flight display, AFD, onboard the aircraft, wherein the at least one first processor of the AFD is configured to execute a flight display system application, FDSA.

14. The system of claim 11, wherein the display unit computing device is offboard of the aircraft.

15. A method, comprising:
obtaining, by at least one processor (502), runway overrun awareness and alerting system, ROAAS, data associated with an approach procedure being performed by an aircraft toward a runway, the ROAAS data including information of a maximum ROAAS model distance, RMD, a nominal model distance, NMD, and a ROAAS runway end; wherein the maximum RMD is a maximum predicted distance required for the aircraft come to a stop on the runway based at least on at least one current aircraft state; wherein the NMD is a predicted stopping distance from a runway threshold of the runway based at least on at least one of an aircraft performance of the aircraft, current environmental conditions associated with the aircraft, an in-air auto brake selection of the aircraft, or an on-ground deceleration rate associated with the aircraft; wherein the ROAAS runway end is an implied runway end based at least on a landing distance available according to at least one of a Notice to Air Mission, NOTAM, or an airport database; wherein one or more of the at least one processor is communicatively coupled to a display (402);
generating, by the at least one processor, a view of an airport moving map, AMM, having a map range, the view being an overhead view, the AMM depicting a location of the aircraft relative to the runway, the runway, a maximum RMD indicator on the runway, an NMD indicator on the runway, and a ROAAS runway end indicator; wherein the maximum RMD indicator is an indicator associated with the maximum RMD; wherein the NMD indicator is an indicator associated with the NMD; wherein the ROAAS runway end indicator is an indicator associated with the ROAAS runway end;
outputting, by the at least one processor, the view of the AMM as graphical data; and
displaying, by the display, the view of the AMM to a user.
